## Europäisches Patentamt
## European Patent Office
## Office européen des brevets

(11) Veröffentlichungsnummer: **0 533 018 B1**

(12) **EUROPÄISCHE PATENTSCHRIFT**

(45) Veröffentlichungstag der Patentschrift: **02.11.95**

(51) Int. Cl.[6]: **C08J 9/34**, C08G 18/66, B29C 44/00, //C08L75/04

(21) Anmeldenummer: **92115278.1**

(22) Anmeldetag: **07.09.92**

(54) **Verfahren zur Herstellung von Verbundkörpern.**

(30) Priorität: **19.09.91 DE 4131207**

(43) Veröffentlichungstag der Anmeldung:
**24.03.93 Patentblatt 93/12**

(45) Bekanntmachung des Hinweises auf die Patenterteilung:
**02.11.95 Patentblatt 95/44**

(84) Benannte Vertragsstaaten:
**BE DE DK FR GB IT**

(56) Entgegenhaltungen:
**WO-A-84/03251
DE-A- 2 110 246
FR-A- 2 527 213
GB-A- 1 507 433**

(73) Patentinhaber: **BAYER AG**

**D-51368 Leverkusen (DE)**

(72) Erfinder: **Wolfrum, Christian, Dr.
Gerstenkamp 12
W-5000 Köln 80 (DE)**
Erfinder: **Knipp, Ulrich, Dr.
Haberlandstrasse 3
W-5060 Bergisch Gladbach 2 (DE)**
Erfinder: **Schuster, Peter
Stephanienufer 3
W-6800 Mannheim 1 (DE)**
Erfinder: **Brock, Martin, Dr.
Ulmenweg 3
W-6823 Neulussheim (DE)**
Erfinder: **Boot, Ronald
Roederweg 21
W-6140 Bensheim (DE)**

## Beschreibung

Die Erfindung betrifft ein neues Verfahren zur Herstellung von Kunststoff-Verbundteilen auf Polyurethanbasis durch Ummantelung eines in einem Formwerkzeug justierten Kernmaterials auf Polyurethanbasis mit einem zu einem Polyurethan ausreagierenden Reaktionsgemisch, wobei zwecks Optimierung der Haftung zwischen den beiden Polyurethanmaterialien als Reaktionsgemisch ein solches auf Basis von ausgewählten Polyhydroxylverbindungen verwendet wird.

Verfahren zur Herstellung von Kunststoff-Verbundteilen, sind bereits bekannt.

Im Dokument WO-A-8 403 251 werden Verbundkörper aus einem PU-Kern und einer PU-Ummantelung offenbart. Die vorteilhaften Effekte von Polyolkomponenten mit einem C:O Gewichtsverhältnis von > 3:1 sind nicht beschrieben.

In sehr allgemeiner Form wird in der EP-A-0069076 ein Verfahren beschrieben, wonach die Ummantelung eines vorher konfektionierten Schaumkerns durch drucklosen Eintrag eines schäumfähigen Gemischs in eine offene bzw. geschlossene Form unter Ausbildung einer gleichmäßigen Deckschicht erfolgen solle. Die exakte Positionierung des Kerns soll durch den Auftrieb gewährleistet sein. Der Kern besteht vorzugsweise aus Polystyrol-Schaumstoff, während die äußere Schicht vorzugsweise aus chemisch getriebenem Epoxidharz besteht. Auf die Haftung zwischen Kern und Deckmaterial wird nicht weiter eingegangen.

In der DE-AS 2 127 582 wird ein Verfahren beschrieben, das durch zeitlich aufeinanderfolgendes Einbringen von mehreren Ausgangssubstanzen in eine geschlossene Form mit unveränderlichem Hohlraum zu zellförmigen Verbundteilen mit kompakten störungsfreien Oberflächen führen soll. Dabei wird mindestens eine erste schäumfähige und eine zweite schäumbare oder nicht schäumbare Kunststofffüllung verwendet, wobei die zweite Füllung unter Kompression der ersten die Oberfläche bildet.

In der DE-OS 3 219 039 wird ein Verfahren beschrieben, bei welchem ebenfalls zeitlich aufeinanderfolgend mindestens zwei unterschiedliche Reaktionssysteme in eine Form eingetragen werden, wobei der letzten Füllung ein inneres Formtrennmittel zugefügt wird, um die Entformbarkeit zu verbessern. Es hat sich jedoch gezeigt, daß nicht nur bei solchen, innere Trennmittel enthaltenden Systemen sondern grundsätzlich Haftungsprobleme zwischen innerer und äußerer Kunststoffschicht bestehen. Dies gilt auch für solche mehrschichtige Formkörper, die ausschließlich aus Polyurethanmaterialien aufgebaut sind.

Es war daher die der Erfindung zugrundeliegende Aufgabe, ein verbessertes Verfahren zur Herstellung von Verbundkörpern auf Polyurethanbasis zur Verfügung zu stellen, bei welchem die Ummantelung aus vorzugsweise lichtechtem Polyurethan fest an dem Polyurethankern haftet, ohne daß bei der Durchführung des Verfahrens Probleme bezüglich der Entformbarkeit entstehen.

Diese Aufgabe konnte mit der Bereitstellung des nachstehend näher beschriebenen erfindungsgemäßen Verfahrens gelöst werden.

Gegenstand der Erfindung ist ein Verfahren zur Herstellung von Verbundkörpern, bestehend aus einem Kern aus gegebenenfalls geschäumtem Polyurethan A und einer Ummantelung, bestehend aus einem Polyurethan B, wobei der Kern in einem Formwerkzeug justiert wird, so daß zwischen der Oberfläche des Kerns und der Innenwand der Form ein mittlerer Abstand von mindestens 0,5 mm besteht und das zum Polyurethan B ausreagierende Reaktionsgemisch aus

a) einer Polyisocyanatkomponente mit einem NCO-Gehalt von 5 bis 50 Gew.-%,
b) einer Polyolkomponente mit einer (mittleren) Hydroxylzahl von 50 bis 800 und gegebenenfalls
c) den aus der Polyurethanchemie an sich bekannten Hilfs- und Zusatzmitteln

in den Zwischenraum zwischen Kern und Forminnenwand gefüllt wird,

dadurch gekennzeichnet, daß die Komponente b) zumindestens zu 30 Gew.-% aus solchen Polyhydroxylverbindungen besteht, bei denen das Kohlenstoff/Sauerstoff-Gewichtsverhältnis bei mindestens 3:1 liegt, so daß dieses Gewichtsverhältnis, bezogen auf die Gesamtmenge der Komponente b) bei mindestens 2,5:1 liegt.

Das in der Form als Kern justierte Polyurethan A besteht aus einem massiven, vorzugsweise jedoch geschäumten Polyurethankunststoff, dessen Härte beliebig dem jeweiligen Verwendungszweck des Verbundteils angepaßt sein kann. Vorzugsweise handelt es sich bei dem Kernmaterial um Polyurethanschaumstoffe des Dichtebereichs 50 bis 900 g/cm$^3$, mit gegebenenfalls integraler Dichteverteilung, wobei sich in diesem Fall die Dichteangaben auf die Rohdichte beziehen. Die Herstellung des Kernmaterials erfolgt nach an sich bekannten Methoden der Polyurethanchemie, wie sie beispielsweise im Kunststoff-Handbuch "Polyurethane" (Herausgeber: Dr. G. Oertel), Carl Hanser Verlag, München, Wien (1983) beschrieben sind. Gut geeignet als Kernmaterialien sind beispielsweise Polyurethankunststoffe, die ihrerseits in geschlossenen Formen hergestellt worden sind.

Bei der Durchführung des erfindungsgemäßen Verfahrens werden die den Kern bildenden Polyurethankunststoffe in der verschließbaren Form, die bei der Durchführung des Verfahrens zum Einsatz gelangt, im allgemeinen so justiert, daß der mittlere Abstand zwischen Oberfläche des Kerns und Innenfläche der Form mindestens 0,5 mm, vorzugsweise mindestens 1,5 mm beträgt, wobei es sich hierbei um einen Mittelwert handelt, so daß nicht ausgeschlossen ist, daß Bereiche existieren, bei denen der Zwischenraum zwischen Kern und Form-Innenwand ein geringerer Abstand als 0,5 mm vorliegt, bzw, bei denen der Kern die Form-Innenwand berührt, so daß der resultierende Formkörper Bereiche aufweisen kann, die nicht mit Polyurethan B ummantelt sind.

Das die Ummantelung der Verfahrensprodukte bildende Polyurethan B wird bei der Durchführung des erfindungsgemäßen Verfahrens durch an sich bekannte Umsetzung eines Reaktionsgemischs aus a) einer Polyisocyanatkomponente, b) einer Polyolkomponente und gegebenenfalls c) Hilfs- und Zusatzmitteln hergestellt.

Die Polyisocyanatkomponente a) weist einen NCO-Gehalt von 5 bis 50, vorzugsweise 10 bis 32 Gew.-% auf. Sie besteht aus mindestens einem an sich bekannten Polyisocyanat. Geeignete Polyisocyanate sind beispielsweise Hexamethylendiisocyanat (HDI), die isomeren Xylylendiisocyanate, 4,4'-Diisocyanato-dicyclohexylmethan, 1-Isocyanato-3,3,5-trimethyl-5-isocyanatomethyl-cyclohexan (IPDI), 2,4- und/oder 2,6-Diisocyanatotoluol, 4,4'-Diisocyanatodiphenylmethan, dessen Gemische mit 2,4'-Diisocyanatodiphenylmethan und gegebenenfalls geringen Mengen 2,2'-Diisocyanatodiphenylmethan und/oder mit seinen höheren Homologen. Ferner in Betracht kommen Urethan- und/oder Carbodiimid- und/oder Uretdion- und/oder Isocyanurat- und/oder Biuret-modifizierte Derivate dieser Polyisocyanate. Besonders bevorzugt werden Urethan-, Biuret-, Isocyanurat- und/oder Uretdiongruppen aufweisende Polyisocyanate mit (cyclo)aliphatisch gebundenen Isocyanatgruppen eingesetzt. Derartige modifizierte Polyisocyanate entstehen beispielsweise durch Urethanisierung (Umsetzung mit unterschüssigen Mengen an mehrwertigen Alkoholen wie beispielsweise Propylenglykol, Trimethylolpropan und/oder 2,2,4-Trimethyl-pentandiol), Biuretisierung, Dimerisierung und/oder Trimerisierung eines Teils der Isocyanatgruppen von HDI oder IPDI.

Die Polyolkomponente b) weist eine Hydroxylzahl von 50 bis 800, vorzugsweise 95 bis 600 mg KOH/g auf. Sie besteht im allgemeinen aus einem Gemisch mehrerer Polyhydroxylverbindungen des Molekulargewichtsbereichs 62 bis 10 000. Als Einzelbestandteile des Gemischs kommen beispielsweise in Betracht;

- Niedermolekulare, in der Polyurethanchemie als Kettenverlängerungs- oder Vernetzungsmittel bekannte, gegebenenfalls Ethergruppen aufweisende Polyole des Molekulargewichtsbereichs 62 bis 400 wie Ethylenglykol, Propylenglykol, die isomeren Butandiole, Hexandiole, Octandiole, Trimethylolpropan, Glycerin, Pentaerythrit und/oder Sorbit, Polyethylenglykole des genannten Molekulargewichtsbereichs, Polypropylenglykole des genannten Molekulargewichtsbereichs, niedermolekulare Propoxylierungsprodukte von Trimethylolpropan des genannten Molekulargewichtsbereichs oder beliebige Gemische derartiger niedermolekularer Polyole.

- Polyetherpolyole eines über 400, vorzugsweise bis zu 10 000, insbesondere 500 bis 6000 liegenden Molekulargewichts wie beispielsweise die Alkoxylierungsprodukte der genannten einfachen mehrwertigen Alkohole oder auch die Alkoxylierungsprodukte von Wasser, Polyaminen mit mindestens zwei NH-Bindungen und/oder von Aminoalkoholen mit mindestens zwei aktiven Wasserstoffatomen oder beliebige Gemische derartiger Polyetherpolyole des genannten Molekulargewichtsbereichs. Besonders bevorzugt sind die Ethoxylierungs- und/oder Propoxylierungsprodukte der beispielhaft genannten Startermoleküle oder von Gemischen von beispielhaft genannten Startermolekülen, wobei Ethylenoxid und/oder Propylenoxid gegebenenfalls im Gemisch und/oder nacheinander bei der Alkoxylierungsreaktion eingesetzt werden.

- Polyesterpolyole der aus der Polyurethanchemie an sich bekannten Art, wie sie beispielsweise durch Veresterung der obengenannten einfachen niedermolekularen Polyole mit mehrbasischen Säuren oder Anhydriden mehrbasischer Säuren erhalten werden. Geeignete Säurekomponenten sind beispielsweise Adipinsäure, Phthalsäure, Tetrahydrophthalsäure und/oder Hexahydrophthalsäure bzw. die Anhydride derartiger Säuren.

Weitere Polyolkomponenten, die in der Komponente b) vorliegen können, sind die aus der Polyurethanchemie an sich bekannten, Hydroxylgruppen aufweisenden Polycarbonate oder Polyacetale.

Vorzugsweise liegen in der Polyolkomponente b) Polyetherpolyole des genannten Hydroxylzahlbereichs, gegebenenfalls im Gemisch mit niedermolekularen Polyolen der beispielhaft genannten Art vor, wobei die entsprechenden 2- und/oder 3-wertigen Vertreter besonders bevorzugt sind.

Erfindungswesentlich ist nun, daß die Polyolkomponente b) so beschaffen ist, daß das Gewichtsverhältnis von in der Polyolkomponente b) vorliegendem Kohlenstoff zu in der Polyolkomponente b) vorliegendem Sauerstoff bei mindestens 2,5:1, vorzugsweise bei 3:1 bis 20:1 und besonders bevorzugt bei 3:1 bis 10:1 liegt. Diese erfindungswesentliche Bedingung wird durch (Mit)-Verwendung von geeigneten Einzelkomponenten im bzw. als Polyol(gemisch) b) sichergestellt. Bei diesen, in einer Menge von mindestens 30 Gew.-

%, insbesondere von mindestens 50 Gew.-%, bezogen auf das Gewicht der Komponente b) eingesetzten, Einzelkomponenten handelt es sich z.B. um pro Molekül mindestens zwei Hydroxylgruppen aufweisende Etherund/oder Estergruppen aufweisende Derivate von gesättigten und/oder ungesättigten Alkanmonocarbonsäuren mit 6 bis 22, vorzugsweise 12 bis 18 Kohlenstoffatomen, oder von Alkanolen mit 6 bis 22, vorzugsweise vorzugsweise 12 bis 18 Kohlenstoffatomen, wobei bezüglich der Eignung derartiger Verbindungen lediglich Voraussetzung ist, daß ihre Hydroxylzahl bei 120 bis 400 mg KOH/g und das Kohlenstoff/Sauerstoff-Gewichtsverhältnis bei mindestens 3:1, vorzugsweise bei mindestens 3,5:1 liegt.

Vorzugsweise handelt es sich bei diesen Verbindungen um hydroxyfunktionelle Fettsäureester wie beispielsweise die Glykolester und insbesondere Glycerinester hydroxyfunktioneller Alkancarbonsäuren. Geeignet sind beispielsweise die hydroxyfunktionellen natürlichen bzw. naturähnlichen Öle und Fette oder deren durch chemische Reaktion wie z.B. Hydrierung, Oxidation, Umesterung, Hydroformulierung, Aminierung, Hydrolyse herstellbare Modifikationen. Besonders bevorzugt sind handelsübliche Ricinusöl-Typen.

Bei den gegebenenfalls mitverwendeten Hilfs- und Zusatzmitteln c) handelt es sich um die in der Polyurethanchemie an sich bekannten Hilfs- und Zusatzmittel.

In Betracht kommen beispielsweise die bekannten, die Isocyanat-Polyadditionsreaktion oder auch die Trimerisierung von Isocyanatgruppen beschleunigenden Katalysatoren wie beispielsweise tert.-Amine wie Triethylamin, Triethylendiamin, Zinnverbindungen wie Zinn(II)octoat oder Dibutylzinndilaurat oder Mannichbasen aus (i) sekundären Aminen wie Dimethylamin, (ii) Aldehyden oder Ketonen wie Formaldehyd oder Aceton und (iii) Phenolen wie Phenol, Nonylphenol oder Bisphenol.

Weitere gegebenenfalls mitzuverwendende Hilfs- und Zusatzmittel sind beispielsweise Treibmittel (Wasser oder leicht siedende, inerte organische Flüssigkeiten wie Butan, Pentan, Hexan), Emulgatoren, Schaumstabilisatoren, Reaktionsverzögerer, Zellregler, Stabilisatoren, flammhemmende Substanzen, Weichmacher, Farbstoffe, Füllstoffe, Trockenmittel wie z.B. Zeolith, sowie fungistatisch und bakteriostatisch wirksame Substanzen.

Einzelheiten über Verwendungs- und Wirkungsweise dieser Zusatzmittel sind im Kunststoff-Handbuch, Band VII, herausgegeben wie Vieweg und Höchtlen, Carl-Hanser-Verlag München, 1966, z.B. auf den Seiten 96 bis 120 beschrieben.

Zu den gegebenenfalls mitzuverwendenden Hilfsmitteln gehören vor allem auch die an sich bekannten inneren Formtrennmittel, wie sie beispielsweise in DE-OS 1 953 637 (= US-PS 3 726 952), DE-OS 2 121 670 (= GB-PS 1 365 215), DE-OS 2 431 968 (= US-PS 4 098 731) bzw. in DE-OS 2 404 310 (= US-PS 4 058 492) beschrieben sind.

Bevorzugte Trennmittel sind die mindestens 25 aliphatische Kohlenstoffatome aufweisenden Salze von Fettsäuren mit mindestens 12 aliphatischen Kohlenstoffatomen und primären Mono-, Di- oder Polyaminen mit zwei und mehr Kohlenstoffatomen oder Amid- oder Estergruppen aufweisenden Aminen, die mindestens eine primäre, sekundäre oder tertiäre Aminogruppe besitzen, gesättigte und/oder ungesättigte COOH- und/oder OH-Gruppen aufweisende Ester von mono- und/oder polyfunktionellen Carbonsäuren und polyfunktionellen Alkoholen mit Hydroxyl- oder Säurezahlen von mindestens 5, esterartige Umsetzungsprodukte aus Ricinolsäure und langkettigen Fettsäuren, Salze aus Carbonsäuren und tertiären Aminen sowie natürliche und/oder synthetische Öle, Fette oder Wachse.

Besonders bevorzugt ist das Ölsäure- oder Tallölfettsäuresalz des amidgruppenhaltigen Amins, das durch Umsetzung von N-Dimethylaminopropylamin mit Ölsäure oder Tallölfettsäure erhalten worden ist, bzw. das Salz aus 2 Mol Ölsäure und 1 Mol 1,4-Diaza-bicyclo-(2,2,2)-octan.

Die beispielhaft genannten inneren Trennmittel werden oft in Mengen von bis zu 5 Gew.-%, bezogen auf das Gewicht der Komponente b) mitverwendet.

Bei der Durchführung des erfindungsgemäßen Verfahrens werden die Ausgangskomponenten in solchen Mengen eingesetzt, daß Isocyanat-Kennzahlen von 80 bis 2000, vorzugsweise 80 bis 150 resultieren. Die Verwendung eines vergleichsweise hohen Überschusses der Komponente a), bezogen auf die Komponente b) kommt insbesondere dann in Betracht, wenn als Hilfsmittel c) Trimerisierungskatalysatoren mitverwendet werden, so daß als Verfahrensprodukte Isocyanuratgruppen aufweisende Polyurethane gebildet werden. Diese Variante kommt insbesondere bei der Verwendung von aromatischen Polyisocyanaten a) in Betracht und ist keinesfalls bevorzugt.

Das erfindungsgemäße Verfahren wird vorzugsweise unter Verwendung von verschließbaren Formen durchgeführt, wobei die Innenwände der Formen mit einem äußeren Formtrennmittel beschichtet sein können. Die Befüllung des Zwischenraums zwischen Kern aus Polyurethan A und Form-Innenwand erfolgt vorzugsweise nach dem Prinzip der Reaktionsspritzgußtechnik, wobei die Menge und Zusammensetzung innerhalb der gemachten Offenbarung des zum Polyurethan B ausreagierenden Reaktionsgemischs vorzugsweise so bemessen werden, daß das die Ummantelung bildende Polyurethan B eine Dichte von 0,8 bis 1,2 g/cm$^3$ aufweist.

Die Härte des die Ummantelung bildenden Polyurethans B kann dem jeweiligen Verwendungszweck der erfindungsgemäßen Verfahrensprodukte angepaßt werden und demzufolge innerhalb des weiten Bereichs von Shore A 30 bis Shore D 85 liegen.

Die erfindungsgemäß hergestellten Verbundkörper können beispielsweise als Konstruktionsteile im Fahrzeug-, Möbel- oder Elektrogerätebau Verwendung finden.

In den nachfolgenden Beispielen beziehen sich alle Prozentangaben und Angaben bezüglich des C/O-Verhältnisses auf das Gewicht.

Beispiele

In den nachfolgenden Beispielen wird als Formwerkzeug eine Metallform zur Herstellung einer Bürostuhl-Armlehne verwendet, in die als Kernmaterial ein flexibler bzw. harter Polyurethanschaum so justiert und fixiert worden ist, daß zwischen Oberfläche des Kerns und Innenwand der Form ein Abstand von 0,5 mm (kleinster Abstand) bis 2,5 mm (größter Abstand) besteht. Dieser Zwischenraum wird dann unter Verwendung einer Hochdruck-Dosieranlage mit dem zum Polyurethan B ausreagierenden Reaktionsgemisch befüllt, so daß massive Ummantelungen des Kerns mit einer Dichte von ca. 1150 g/cm$^3$ resultieren.

Die Rohstofftemperatur lag bei ca. 20 bis 50°C, die Werkzeugtemperatur bei ca. 45 bis 70°C. Die Forminnenwand wurde vor Gemischeintrag mit einem handelsüblichen äußeren Trennmittel beschichtet. Die Formstandzeit betrug 2 bis 4 Minuten.

Die Kerne wurden vorab in einem separaten Arbeitsgang unter Verwendung von analogen Formwerkzeugen gefertigt, deren Volumen entsprechend der Schichtdicke der Ummantelung verkleinert war.

Herstellung des Kernmaterials

Polyolkomponente 1

Gemisch aus
31 Gew.-Teilen eines Polyetherpolyols der OH-Zahl 28, hergestellt durch Propoxylierung von Propylenglykol und anschließende Ethoxylierung des Propoxylierungsprodukts (PO:EO-Gewichtsverhältnis = 80:20)
55 Gew.-Teilen eines Polyetherpolyols der OH-Zahl 35, hergestellt durch Propoxylierung von Trimethylolpropan und anschließende Ethoxylierung des Propoxylierungsprodukts (PO:EO-Gewichtsverhältnis = 87:13)
7,9 Gew.-Teile Ethylenglykol
0,3 Gew.-Teile Dibutylzinndilaurat
0,5 Gew.-Teile Wasser

0,3 Gew.-Teile eines handelsüblichen Polyetherpolysiloxan-Stabilisators ( OS 50 der Firma Th. Goldschmidt AG, Essen).
OH-Zahl des Gemischs: 170

Polyolkomponente 2

Gemisch aus
54,5 Gew.-Teilen eines Polyetherpolyols der OH-Zahl 860, hergestellt durch Propoxylierung von Trimethylolpropan
40 Gew.-Teilen eines Polyetherpolyols der OH-Zahl 42, hergestellt durch Propoxylierung von Trimethylolpropan und anschließende Ethoxylierung des Propoxylierungsprodukts (PO:EO-Gewichtsverhältnis = 70:30)
3 Gew.-Teile Dimethylbenzylamin
0,5 Gew.-Teile Wasser
2 Gew.-Teile des Polyetherpolysiloxans gemäß Polyolkomponente 1
OH-Zahl des Gemischs: 485

Isocyanatkomponente 1

Urethangruppen aufweisendes Polyisocyanat mit einem NCO-Gehalt 29 %, hergestellt durch Umsetzung eines Polyisocyanatgemischs der Diphenylmethanreihe mit Tripropylenglykol. Das Polyisocyanatgemisch wies einen Zweikern-Anteil von ca. 80 % auf, der seinerseits zu ca. 90 % aus 4,4'-Diisocyanatodiphenylmethan und zum Rest im wesentlichen aus 2,4'-Diisocyanatodiphenylmethan bestand.

Isocyanatkomponente 2

Polyisocyanatgemisch der Diphenylmethanreihe mit einem NCO-Gehalt von 31 % und einem Zweikern-Anteil von 55 %, der seinerseits zu 95 % aus 4,4'-Diisocyanatodiphenylmethan bestand.

Rezeptur 1

100 Gew.-Teile der Polyolkomponente 1 werden mit 48 Gew.-Teile der Isocyanatkomponente 1 zu einem weichen Polyurethanschaumstoff mit integraler Dichteverteilung (Rohdichte = 500 g/cm$^3$ ) umgesetzt.

Rezeptur 2

100 Gew.-Teile Polyolkomponente 2 werden mit 130 Gew.-Teilen Isocyanatkomponente 2 zu einem harten Schaumstoff mit integraler Dichteverteilung (Rohdichte = 600 g/cm$^3$) umgesetzt.

Herstellung von Polyurethanen B (ummantelnde Füllung)

Polyolkomponente 3

Gemisch aus
85,5 Gew.-Teilen Ricinusöl (OH-Zahl 180, C/O-Verhältnis = 4,5:1)
10 Gew.-Teile des Polyetherpolyols der OH-Zahl 28 gemäß Polyolkomponente 1
4 Gew.-Teile Zeolith (Trockenmittel)
0,5 Gew.-Teile Zinndiacetat
OH-Zahl des Gemischs: 160
C/O-Verhältnis des Gemischs: 4,2:1

Polyolkomponente 4

Gemisch aus
50 Gew.-Teilen Ricinusöl (OH-Zahl 180)
45,5 Gew.-Teile eines Polyetherpolyols der OH-Zahl 660, hergestellt durch Propoxylierung von Trimethylolpropan
4 Gew.-Teile Zeolith
0,5 Gew.-Teile Zinndiacetat
OH-Zahl des Gemischs: 390
C/O-Verhältnis des Gemischs: 3,2:1

Polyolkomponente 5

85,5 Gew.-Teile eines handelsüblichen, Hydroxylgruppen aufweisenden Fettsäurederivats der OH-Zahl 215 mit einem C/O-Verhältnis von 3,6:1 (®Sovermol POL 1012 der Fa. Henkel, Düsseldorf)
10 Gew.-Teile des Polyetherpolyols der OH-Zahl 28 gemäß Polyolkomponente 1
4 Gew.-Teile Zeolith
0,5 Gew.-Teile Zinndiacetat
OH-Zahl des Gemischs: 190
C/O-Verhältnis des Gemischs: 3,2:1

Polyolkomponente 6

85,5 Gew.-Teile eines handelsüblichen, Hydroxylgruppen aufweisenden Fettsäurederivats der OH-Zahl 190 mit einem C/O-Verhältnis von 17,8:1 (®Sovermol 650 NS der Fa. Henkel, Düsseldorf)
10 Gew.-Teile des Polyetherpolyols der OH-Zahl 28 gemäß Polyolkomponente 1
4 Gew.-Teile Zeolith
0,5 Gew.-Teile Zinndiacetat
OH-Zahl des Gemischs: 165
C/O-Verhältnis des Gemischs: 16,1:1

Polyolkomponente 7

Gemisch aus
85,5 Gew.-Teilen eines Hydroxylgruppen aufweisenden Fettsäurederivats der OH-Zahl 220 mit einem C/O-Verhältnis von 3,6:1 (®Solvermol POL 1068 II der Fa. Henkel, Düsseldorf)
10 Gew.-Teile des Polyetherpolyols der OH-Zahl 28 gemäß Polyolkomponente 1
4 Gew.-Teile Zeolith
0,5 Gew.-Teile Zinndiacetat
OH-Zahl des Gemischs: 190
C/O-Verhältnis des Gemischs: 3,2:1

Polyolkomponente 8 (Vergleich)

Gemisch aus
80 Gew.-Teilen eines Polyetherpolyols der OH-Zahl 250, hergestellt durch Propoxylierung von Glycerin
15,5 Gew.-Teile des Polyetherpolyols der OH-Zahl 28 gemäß Polyolkomponente 1
4 Gew.-Teile Zeolith
0,5 Gew.-Teile Zinndiacetat
Hydroxylzahl des Gemischs: 205
C/O-Verhältnis des Gemischs: 1,9:1

Polyolkomponente 9 (Vergleich)

Gemisch aus
50 Gew.-Teilen des Polyetherpolyols der OH-Zahl 250 gemäß Polyolkomponente 8
45,5 Gew.-Teile eines Polyetherpolyols der OH-Zahl 56, hergestellt durch Propoxylierung von Trimethylolpropan
4 Gew.-Teile Zeolith
0,5 Gew.-Teile Zinndiacetat
OH-Zahl des Gemischs: 150
C/O-Verhältnis des Gemischs: 2,1:1

Isocyanatkomponente 3

Urethangruppen aufweisendes Polyisocyanat mit einem NCO-Gehalt von 27 %, hergestellt durch Umsetzung von IPDI mit Trimethylolpropan.

Isocyanatkomponente 4

Biuretpolyisocyanat auf Basis von HDI mit einem NCO-Gehalt von 23 %

Rezeptur 3

100 Gew.-Teile Polyolkomponente 3
57 Gew.-Teile Isocyanatkomponente 4

Rezeptur 4

100 Gew.-Teile Polyolkomponente 4
146 Gew.-Teile Isocyanatkomponente 3

Rezeptur 5

100 Gew. -Teile Polyolkomponente 5
68 Gew.-Teile Isocyanatkomponente 4

Rezeptur 6

100 Gew.-Teile Polyolkomponente 6
59 Gew.-Teile Isocyanatkomponente 4

Rezeptur 7

100 Gew.-Teile Polyolkomponente 7
68 Gew.-Teile Isocyanatkomponente 4

Rezeptur 8 (Vergleichsrezeptur)

100 Gew.-Teile Polyolkomponente 8
72 Gew.-Teile Isocyanatkomponente 4
Ungenügende Haftung zwischen Kern und Deckschicht.

Rezeptur 9 (Vergleichsrezeptur)

100 Gew.-Teile Polyolkomponente 9
155 Gew.-Teile Isocyanatkomponente 3
Ungenügende Haftung zwischen Kern und Deckschicht.
Die Versuchsergebnisse werden in der Tabelle
beschrieben.

**Tabelle**

| Beispiel | Kernmaterial | Deckmaterial | Haftung zwischen Kern und Ummantelung | Oberflächenhärte (Shore A/D) |
|---|---|---|---|---|
| 1 | Rezeptur 1 | Rezeptur 3 | einwandfrei | ca. 70/- |
| 2 | Rezeptur 2 | Rezeptur 4 | einwandfrei | -/ca. 75 |
| 3 | Rezeptur 1 | Rezeptur 5 | einwandfrei | ca. 75/- |
| 4 | Rezeptur 1 | Rezeptur 6 | einwandfrei | ca. 70/- |
| 5 | Rezeptur 1 | Rezeptur 7 | einwandfrei | ca. 72/- |
| 6 | Rezeptur 1 | Rezeptur 8 | keine Haftung | ca. 76/- |
| 7 | Rezeptur 2 | Rezeptur 9 | keine Haftung | -/ca. 78 |

**Patentansprüche**

1. Verfahren zur Herstellung von Verbundkörpern,
bestehend aus einem Kern aus gegebenenfalls
geschäumtem Polyurethan A und einer Ummantelung, bestehend aus einem Polyurethan B, wobei der Kern in einem Formwerkzeug justiert wird, so daß zwischen der Oberfläche des Kerns und der Innenwand der Form ein mittlerer Abstand von mindestens 0,5 mm besteht und das zum Polyurethan B ausreagierende Reaktionsgemisch aus

a) einer Polyisocyanatkomponente mit einem NCO-Gehalt von 5 bis 50 Gew.-%,

b) einer Polyolkomponente mit einer (mittleren) Hydroxylzahl von 50 bis 800 und gegebenenfalls

c) den aus der Polyurethanchemie an sich bekannten Hilfs- und Zusatzzmitteln

in den Zwischenraum zwischen Kern und Forminnenwand gefüllt wird,

dadurch gekennzeichnet, daß die Komponente b) zumindestens zu 30 Gew.-% aus solchen Polyhydroxylverbindungen besteht, bei denen das Kohlenstoff/Sauerstoff-Gewichtsverhältnis bei mindestens 3:1 liegt, so daß dieses Gewichtsverhältnis, bezogen auf die Gesamtmenge der Komponente b) bei mindestens 2,5:1 liegt.

2. Verfahren gemäß Anspruch 1, dadurch gekennzeichnet, daß die Polyisocyanatkomponente a) ausschließlich aus Polyisocyanaten mit (cyclo)aliphatisch gebundenen Isocyanatgruppen besteht.

3. Verfahren gemaß Anspruch 1 und 2, dadurch gekennzeichnet, daß die Komponente b) zumindest zu 50 Gew.-% aus Polyhydroxylverbindungen des Hydroxylzahlbereichs 120 bis 400 mg KOH/g besteht, in denen das Kohlenstoff/Sauerstoff-Gewichtsverhältnis bei mindestens 3,5:1 liegt.

4. Verfahren gemäß Anspruch 1 bis 3, dadurch gekennzeichnet, daß man als Komponente c) an sich bekannte innere Formtrennmittel, gegebenenfalls neben weiteren Hilfs- und Zusatzmitteln verwendet.

5. Verfahren gemäß Anspruch 1 bis 4, dadurch gekennzeichnet, daß man Menge und Zusammensetzung des zum Folyurethan B ausreagierenden Reaktionsgemischs so bemißt, daß die aus diesem Reaktionsgemisch entstehende Ummantelung eine Dichte von 0,8 bis 1,2 $g/cm^3$ aufweist.

6. Verfahren gemäß Anspruch 1 bis 5, dadurch gekennzeichnet, daß als Formwerkzeug eine geschlossene Metallform verwendet wird und die Befüllung des Zwischenraums zwischen Kern und Innenwand der Form mit dem zum Polyurethan B ausreagierenden Reaktionsgemisch nach dem Prinzip der Reaktionsspritzgußtechnik erfolgt.

## Claims

1. Process for the production of composite bodies comprising a core of optionally foamed polyurethane A and a sheath consisting of a polyurethane B, wherein the core is adjusted inside a mould so that an average distance of at least 0.5 mm exists between the surface of the core and the internal wall of the mould and the reaction mixture of

a) a polyisocyanate component having an NCO content of from 5 to 50% by weight,

b) a polyol component having an (average) hydroxyl number of from 50 to 800 and optionally

c) the auxiliary substances and additives known per se from polyurethane chemistry,

which reacts to form polyurethane B is introduced into the space between the core and the internal wall of the mould, characterised in that component b) consists to an extent of at least 30% by weight of polyhydroxyl compounds wherein the carbon/oxygen ratio by weight is at least 3:1, so that this ratio by weight, referred to the total quantity of component b), is at least 2.5:1.

2. Process according to claim 1, characterised in that polyisocyanate component a) consists exclusively of polyisocyanates having (cyclo)-aliphatically bonded isocyanate groups.

3. Process according to claims 1 and 2, characterised in that component b) consists to an extent of at least 50% by weight of polyhydroxyl compounds in the hydroxyl number range of from 120 to 400 mg KOH/g, the carbon/oxygen ratio by weight whereof is at least 3.5:1.

4. Process according to claims 1 to 3, characterised in that internal mould release agents known per se are used as component c), optionally in addition to other auxiliary substances and additives.

5. Process according to claims 1 to 4, characterised in that the quantity and composition of the reaction mixture which reacts to form polyurethane B are calculated so that the sheath produced from this reaction mixture will have a density of from 0.8 to 1.2 $g/cm^3$.

**6.** Process according to claims 1 to 5, characterised in that the mould used is a closed metal mould and filling of the space between the core and the internal wall of the mould with the reaction mixture which is to react to form polyurethane B is carried out on the principle of the reaction injection moulding process.

**Revendications**

**1.** Procédé pour la préparation de corps composites consistant en un noyau d'un polyuréthanne A éventuellement gonflé en mousse et un enrobage consistant en un polyuréthanne B, le noyau étant ajusté dans un outil de moulage en sorte qu'entre la surface du noyau et la paroi intérieure du moule, il y ait une distance moyenne d'au moins 0,5 mm, le mélange de réaction donnant le polyuréthanne B et consistant en

a) un composant polyisocyanate à une teneur en NCO de 5 à 50 % en poids,

b) un composant polyol ayant un indice d'hydroxyle (moyen) de 50 à 800 et le cas échéant

c) les produits auxiliaires et additifs connus en soi dans la chimie des polyuréthannes, étant introduit dans l'espace libre existant entre le noyau et la paroi intérieure du moule,

ce procédé se caractérisant en ce que le composant b) consiste pour au moins 30 % de son poids en composés polyhydroxylés dans lesquels le rapport en poids carbone/oxygène est d'au moins 3:1, de sorte que ce rapport en poids, sur la quantité totale du composant b), soit d'au moins 2,5:1.

**2.** Procédé selon la revendication 1, caractérisé en ce que le composant polyisocyanate a) consiste exclusivement en polyisocyanates à groupes isocyanates à liaisons (cyclo)-aliphatiques.

**3.** Procédé selon les revendications 1 et 2, caractérisé en ce que le composant b) consiste pour au moins 50 % de son poids en composés polyhydroxylés d'indice d'hydroxyle 120 à 400 mg de KOH/g et dans lesquels le rapport en poids carbone/oxygène est d'au moins 3,5:1.

**4.** Procédé selon les revendications 1 à 3, caractérisé en ce que l'on utilise en tant que composants c) des agents de démoulage internes connus en soi, le cas échéant avec d'autres produits auxiliaires et additifs.

**5.** Procédé selon les revendications 1 à 4, caractérisé en ce que la quantité et la composition du mélange de réaction donnant le polyuréthanne B sont réglées en sorte que l'enrobage formé à partir de ce mélange de réaction présente une densité de 0,8 à 1,2 g/cm$^3$.

**6.** Procédé selon les revendications 1 à 5, caractérisé en ce que l'on utilise pour le moulage un moule métallique fermé et en ce que le remplissage de l'espace libre entre le noyau et la paroi intérieure du moule par le mélange de réaction donnant le polyuréthanne B est réalisé par le principe du moulage réactif par injection.